# EUROPEAN PATENT SPECIFICATION

(11) **EP 1 593 857 B1**
(45) Date of publication and mention of the grant of the patent: **06.02.2008**
(21) Application number: 05007714.8
(22) Date of filing: 08.04.2005
(51) Int. Cl.: F15B 15/14

(54) **Cylinder protective apparatus for preventing strange noise**
Zylinderschutzvorrichtung zur Verhinderung von Rauschen
Dispositif de protection de vérin pour supprimer le bruit

(30) Priority: 04.05.2004 KR 2004031399
(43) Date of publication of application: 09.11.2005
(73) Proprietor: Volvo Construction Equipment Holding Sweden AB, 631 85 Eskilstuna (SE)
(72) Inventor: Kim, Ki Jung, Sinwal-dong, Changwon (KR)
(74) Representative: Weitzel, Wolfgang

(56) References cited:
- GB-A- 2 385 379
- PATENT ABSTRACTS OF JAPAN vol. 2002, no. 05, 3 May 2002 (2002-05-03) -& JP 2002 021812 A (HITACHI CONSTR MACH CO LTD), 23 January 2002 (2002-01-23)
- PATENT ABSTRACTS OF JAPAN vol. 1997, no. 03, 31 March 1997 (1997-03-31) & JP 08 296611 A (KOBELCO KENKI ENG KK), 12 November 1996 (1996-11-12)
- PATENT ABSTRACTS OF JAPAN vol. 2002, no. 05, 3 May 2002 (2002-05-03) -& JP 2002 013507 A (SHIN CATERPILLAR MITSUBISHI LTD), 18 January 2002 (2002-01-18)
- PATENT ABSTRACTS OF JAPAN vol. 013, no. 310 (M-850), 14 July 1989 (1989-07-14) -& JP 01 098701 A (HITACHI CONSTR MACH CO LTD), 17 April 1989 (1989-04-17)

## Description

### BACKGROUND OF THE INVENTION

### Field of the Invention

The present invention relates to a cylinder protective apparatus for use in a heavy construction equipment such as an excavator, and more particularly to, a cylinder protective apparatus for preventing strange noise in which a cylinder and a cylinder rod are prevented from being damaged and strange noise due to a gap between a fitting portion of the cylinder rod and a cylinder cover is prevented from being generated.

### Description of the Related Art

Generally, a hydraulic cylinder for use in a heavy construction equipment such as an excavator works as a cylinder rod moves elastically. In this case, the cylinder rod is externally exposed. Waste such as dust stuck on a surface of the cylinder rod may enter the cylinder and damage the cylinder rod because of a poor working area where dust or soil is continuously generated. Also, the cylinder rod may directly be subjected to impact due to stone or rock. Moreover, the cylinder rod may be damaged by chemical action of waste stuck on its surface. To solve such problems, a cover is used to protect the cylinder rod, as shown for instance in the document JP-2002 021812.

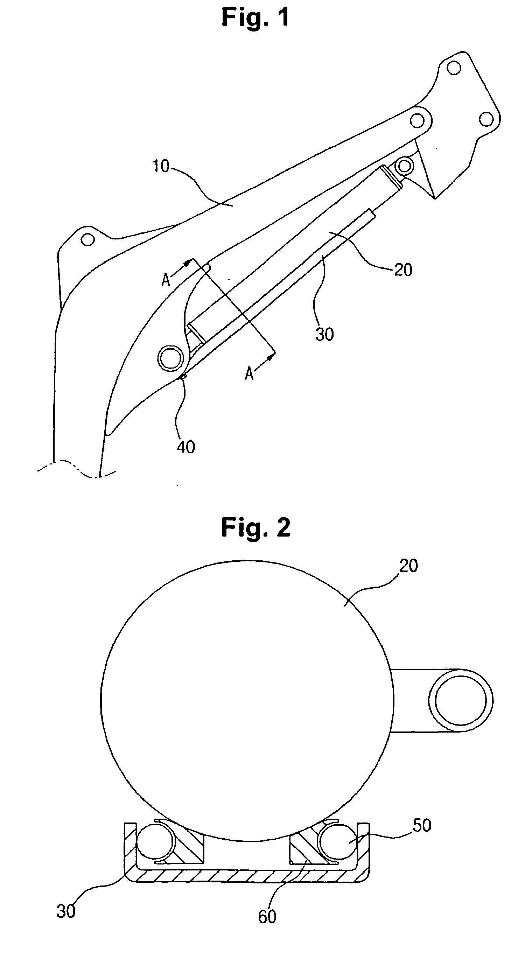

FIG. 1 illustrates appearance of a related art excavator. As shown in FIG. 1, the related art excavator is provided with a boom cylinder 20 to move a boom 10 and a cylinder cover 30 at an outer side of the boom cylinder. The cylinder cover 30 has an end fixed to a head portion of the cylinder rod by a cover fitting bolt 40 to move along a cylinder guide of the cylinder when the cylinder rod moves elastically.

FIG. 2 is a sectional view taken along line A-A of FIG. 1. As shown in FIG. 2, a cover guide 50 connected with the cylinder cover 30 is in contact with a cylinder guide 60 connected with the boom cylinder 20 when the cylinder rod moves elastically. The cylinder rod is covered with the cylinder cover 30 so as not to be externally exposed.

In the related art, the cylinder rod may be protected so as not to be externally exposed. However, the cylinder cover may collide with the cylinder or the cylinder guide at the gap generated between the inner side of the cylinder cover 30 and the cylinder or the cylinder guide due to vibration generated when the heavy construction equipment such as an excavator works. For this reason, the cylinder rod may be damaged and strange noise may occur.

### SUMMARY OF THE INVENTION

Accordingly, the present invention is directed to a cylinder protective apparatus for preventing strange noise that substantially obviates one or more problems due to limitations and disadvantages of the related art.

An object of the present invention is to provide a cylinder protective apparatus for preventing strange noise in which collision between a cylinder cover and a cylinder or a cylinder guide is prevented from occurring, which may be caused by vibration generated when a heavy construction equipment works.

Another object of the present invention is to provide a cylinder protective apparatus for preventing strange noise in which strange noise due to a gap generated between a cylinder cover and a cylinder or a cylinder guide is prevented from occurring.

To achieve these objects and other advantages and in accordance with the purpose of the invention, as embodied and broadly described herein, a cylinder protective apparatus includes a cylinder cover whose one end is fixed to a head portion of a cylinder rod and the other end is extended in a length direction of a cylinder to protect the cylinder rod and the cylinder, moving as the cylinder rod moves elastically, a cylinder guide fixed to the outer circumference of the cylinder to guide motion of the cylinder cover, and an impact damper fixed to an inner side of the cylinder cover, having one side with a shape corresponding to that of the cylinder guide to adjoin one side of the cylinder guide.

Preferably, the cylinder cover has both ends bent in a horizontal direction to form an inner chamber having a '⊏' shaped section, the impact damper is fixed to the inner chamber formed in the cylinder cover and has a groove at one side, and the cylinder guide is inserted into the groove of the impact damper to move the cylinder cover.

Preferably, the impact damper has a through hole therein fixed by a bolt.

Preferably, the impact damper is made of polyurethane.

### BRIEF DESCRIPTION OF THE DRAWINGS

The above aspects and features of the present invention will be more apparent by describing certain embodiments of the present invention with reference to the accompanying drawings, in which:

FIG. 1 illustrates appearance of a general excavator;

FIG. 2 is a sectional view illustrating a cylinder protective apparatus according to the related art;

FIG. 3 is a sectional view illustrating a cylinder protective apparatus according to the first embodiment of the present invention;

FIG. 4 is a sectional view taken along line A-A of a cylinder protective apparatus shown in FIG. 3,

FIG. 5 is a sectional view illustrating a cylinder protective apparatus according to the second embodiment of the present invention; and

FIG. 6 is a sectional view taken along line A-A of a cylinder protective apparatus shown in FIG. 5.

### DETAILED DESCRIPTION OF THE PREFERRED EMBODIMENTS

Reference will now be made in detail to the preferred embodiments of the present invention, examples of which are illustrated in the accompanying drawings. Wherever possible, the same reference numbers will be used throughout the drawings to refer to the same or like parts.

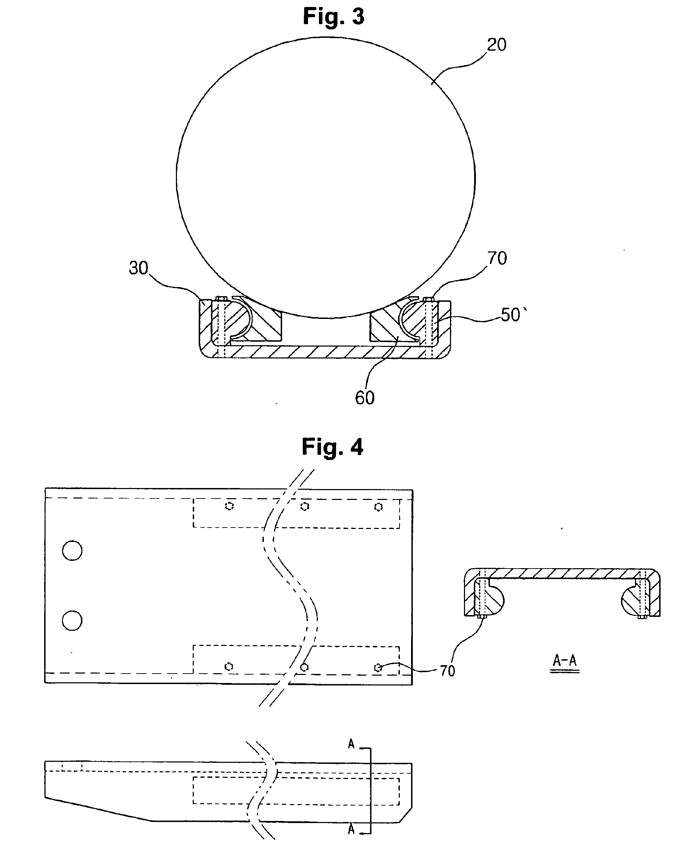

As shown in FIG. 3, an impact damper 50' that acts as a cover guide 50 of the related art is fixed to an inner side of a cylinder cover 30. Since the impact damper 50' has a shape corresponding to that of a cylinder guide 60, the cylinder cover 30 can be moved along the cylinder guide 60 provided on the outer circumference of a cylinder.

Further, since the impact damper 50' is fixed in contact with the inner side of the cylinder cover 30, collision between the inner side of the cylinder cover 30 and the cylinder guide 50 or strange noise can be prevented from occurring even in case that the cylinder cover 30 moves due to vibration. The impact damper 50' is made of polyurethane material and has a through hole to be easily fixed to or detached from the cylinder cover 30 by a bolt 70 for fitting the impact damper. The material or fixation of the impact damper is not limited to the above description.

Referring to FIG. 4, the impact damper 50' is fixed to the cylinder cover 30 by the bolt 70. Also, in the detailed sectional view taken along line A-A, one side of the impact damper 50' is protruded to correspond to the cylinder guide 60.

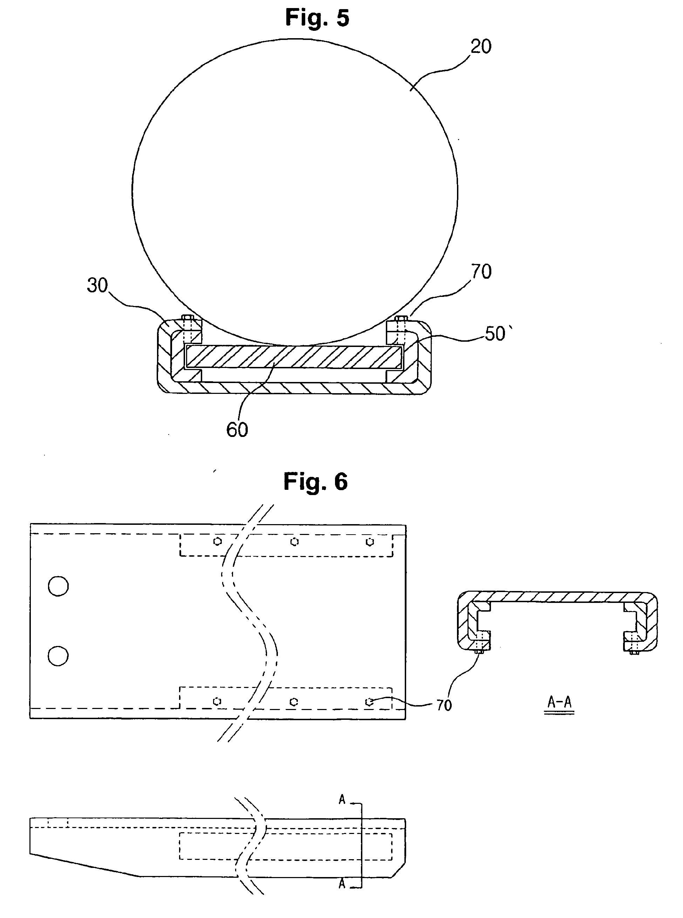

FIG. 5 illustrates a cylinder cover 30 according to the second embodiment of the present invention. As shown in FIG. 5, the cylinder cover 30 has both ends bent in a horizontal direction to form an inner chamber having a '⊏' shaped section. The impact damper 50' is fixed to the inner chamber formed in the cylinder cover 30 and has a groove at one side. The cylinder guide has a shape corresponding to the groove so that it may be inserted into the groove to move the cylinder cover 30. Therefore, since the impact damper 50' is fixed to the cylinder cover 30, collision between the cylinder cover 30 and the cylinder guide 60 and strange noise may be avoided even in case that the cylinder cover moves due to vibration.

Referring to FIG. 6, the cylinder cover 30 has both ends with a '⊏' shaped inner chamber, and the impact damper 50' having a through hole is fixed to the inner side of the cylinder cover by the bolt 70'. Also, a groove is formed at one side of the impact damper 50' to correspond to the shape of the cylinder guide 60.

As described above, the cylinder protective apparatus for preventing strange noise according to the present invention has the following advantages.

Collision between the cylinder cover and the cylinder or the cylinder guide can be prevented from occurring, which may be caused by vibration generated as the cylinder rod moves elastically when the heavy construction equipment works.

In addition, strange noise due to the gap generated between the cylinder cover and the cylinder or the cylinder guide can be prevented from occurring.

The foregoing embodiment and advantages are merely exemplary and are not to be construed as limiting the present invention. The present teaching can be readily applied to other types of apparatuses. Also, the description of the embodiments of the present invention is intended to be illustrative, and not to limit the scope of the claims, and many alternatives, modifications, and variations will be apparent to those skilled in the art.

## Claims

1. A cylinder protective apparatus comprising:
a cylinder cover (30) whose one end is fixed to a head portion of a cylinder rod and the other end is extended in a length direction of a cylinder to protect the cylinder rod and the cylinder, moving as the cylinder rod moves elastically;
a cylinder guide (60) fixed to the outer circumference of the cylinder to guide motion of the cylinder cover (30); and **characterized in that** it further comprises
an impact damper (50') fixed to an inner side of the cylinder cover, having one side with a shape corresponding to that of the cylinder guide (60) to adjoin one side of the cylinder guide (60).

2. The cylinder protective apparatus according to claim 1, wherein the cylinder cover (30) has both ends bent in a horizontal direction to form an inner chamber having a 'C' shaped section.

3. The cylinder protective apparatus according to claim 1, wherein the impact damper (50') is fixed to the inner chamber formed in the cylinder cover and has a groove at one side, and the cylinder guide (60) is inserted into the groove of the impact damper to move the cylinder cover.

4. The cylinder protective apparatus according to any one of claims 1 to 3, wherein the impact damper (50') has a through hole therein fixed by a bolt (70).

5. The cylinder protective apparatus according to claim 1, wherein the impact damper (50') is made of polyurethane.

## Patentansprüche

1. Zylinderschutzvorrichtung, die Folgendes umfasst:
eine Zylinderabdeckung (30), deren eines Ende an einem Kopfteil einer Zylinderstange befestigt ist und deren anderes Ende sich in Längsrichtung eines Zylinders erstreckt, um die Zylinderstange und den Zylinder zu schützen, die sich mit der Bewegung der Zylinderstange elastisch bewegt;
eine Zylinderführung (60), die am Außenumfang des Zylinders befestigt ist, um die Bewegung der Zylinderabdeckung (30) zu führen, **dadurch gekennzeichnet, dass** sie des weiteren einen Stoßdämpfer (50) umfasst, der an einer Innenseite der Zylinderabdeckung befestigt ist und der eine Seite aufweist, deren Form jener der Zylinderführung (60) entspricht, um an eine Seite der Zylinderführung (60) anzugrenzen.

2. Zylinderschutzvorrichtung gemäß Anspruch 1, wobei beide Enden der Zylinderabdeckung (30) in horizontaler Richtung so gebogen sind, dass die Zylinderabdeckung eine Innenkammer mit "C"-förmigem Querschnitt ausbildet.

3. Zylinderschutzvorrichtung gemäß Anspruch 1, wobei der Stoßdämpfer (50') an der in der Zylinderabdeckung ausgebildeten Innenkammer befestigt ist und auf einer Seite eine Nut aufweist, und wobei die Zylinderführung (60) in die Nut des Stoßdämpfers eingeführt ist, um die Zylinderabdeckung zu bewegen.

4. Zylinderschutzvorrichtung gemäß einem der Ansprüche 1 bis 3, wobei der Stoßdämpfer (50') ein durchgehendes Loch aufweist, das mit einer Schraube (70) fixiert ist.

5. Zylinderschutzvorrichtung gemäß Anspruch 1, wobei der Stoßdämpfer (50') aus Polyurethan gemacht ist.

## Revendications

1. Dispositif de protection de cylindre comprenant :
une culasse (30) dont une extrémité est fixée à une partie de tête d'une tige de cylindre et l'autre extrémité s'étend dans le sens longitudinal d'un cylindre pour protéger la tige de cylindre et le cylindre, et qui se déplace lors des mouvements élastiques de la tige de cylindre ;
un guide de cylindre (60) fixé sur la circonférence extérieure du cylindre pour guider le mouvement de la culasse (30), **caractérisé en ce qu'**il comporte en outre
un amortisseur de chocs (50') fixé sur une face intérieure de la culasse, dont un côté a une forme correspondant à celle du guide de cylindre (60) et est adjacent à un côté du guide de cylindre (60).

2. Dispositif de protection de cylindre selon la revendication 1, dans lequel la culasse (30) a ses deux extrémités recourbées horizontalement pour former une chambre intérieure ayant une section en forme de C.

3. Dispositif de protection de cylindre selon la revendication 1, dans lequel l'amortisseur de chocs (50') est fixé à la chambre intérieure formée dans la culasse et possède une gorge sur un côté, et le guide de cylindre (60) est introduit dans la gorge de l'amortisseur de chocs pour déplacer la culasse.

4. Dispositif de protection de cylindre selon l'une des revendications 1 à 3, dans lequel l'amortisseur de chocs (50') possède un trou traversant fixé par un boulon (70).

5. Dispositif de protection de cylindre selon la revendication 1, dans lequel l'amortisseur de chocs (50') est fait de polyuréthane.
